# FASCICULE DE BREVET EUROPEEN

(11) **EP 2 499 006 B1**
(45) Date de publication et mention de la délivrance du brevet: **16.07.2014**
(21) Numéro de dépôt: 10776663.6
(22) Date de dépôt: 08.11.2010
(51) Int. Cl.: B60C 9/20, B60C 19/00

(54) **PNEUMATIQUE COMPORTANT AU MOINS DEUX BI-COUCHES**
REIFEN MIT MINDESTENS ZWEI DOPPELSCHICHTEN
TYRE COMPRISING AT LEAST TWO DUAL LAYERS

(30) Priorité: 09.11.2009 FR 0957897
(43) Date de publication de la demande: 19.09.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: COGNE, Michael, F-63200 Riom (FR); DE-TULLIO, Murielle, F-63100 Clermont-Ferrand (FR)
(74) Mandataire: Le Cam, Stéphane Georges Elie
(86) Numéro de dépôt international: PCT/EP2010/066978
(87) Numéro de publication internationale: WO 2011/054949

(56) Documents cités:
- EP-A2- 0 351 199
- FR-A1- 2 836 655
- US-A- 3 018 814
- US-A- 4 947 914

## Description

L'invention concerne un pneumatique comportant une armature de sommet formée d'au moins deux bi-couches d'éléments de renforcement parallèles dans une couche et croisés d'une couche à l'autre qui ne présentent pas d'extrémité libre sur leurs bords.

Bien que non limité à une telle application, l'invention sera plus particulièrement décrite en référence à un pneumatique d'avion. Les pneumatiques d'avion se singularisent notamment par la combinaison de pression de gonflage supérieure à 9 bars et d'une flèche relative supérieure à 28 %.

La flèche d'un pneumatique est définie par la déformation radiale du pneumatique, ou variation de la hauteur radiale, lorsque celui-ci passe d'un état non chargé à un état chargé en statique, dans des conditions de charge et de pression nominales.

Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le crochet. Le diamètre extérieur du pneumatique est mesuré en statique dans un état non chargé à la pression nominale.

Le pneumatique selon l'invention comporte une armature de sommet constituée d'au moins deux bi-couches formant ainsi quatre couches de travail, superposées et formées d'éléments de renforcement parallèles dans chaque couche et croisés d'une couche à la suivante en faisant un angle avec la direction circonférentielle du pneumatique. La présence de bi-couches selon l'invention permet d'avoir des couches de travail dont les éléments de renforcement ne présentent pas d'extrémités libres en bord de couches.

De tels bi-couches permettent de s'affranchir des conséquences usuelles dues aux contraintes de cisaillement générées par des extrémités libres entre les couches de sommet qui contribuent à des élévation non négligeable de la température de fonctionnement au niveau des extrémités desdites couches, et qui ont pour conséquence l'apparition et la propagation de fissures de la gomme au niveau desdites extrémités.

Des bi-couches dans les pneumatiques avions sont habituellement réalisés selon des techniques consistant à déposer des éléments de renforcement ou des bandelettes constituées de plusieurs éléments de renforcement en allant d'un bord à l'autre de façon continue pour former une période ou un multiple de période au tour de roue. Selon ces techniques il est ainsi possible de réaliser des couches de travail formées d'éléments de renforcement parallèles dans chaque couche et croisés d'une couche à la suivante qui ne présentent pas d'extrémités libres en bords de nappes et donc conduisent à une amélioration de l'endurance des pneumatiques.

Ces bi-couches peuvent encore être formés par un enroulement circonférentiel d'une bande complexe formée de deux couches constituées d'éléments de renforcement continus passant d'une couche à l'autre. La bande complexe peut être préalablement obtenue selon un procédé consistant à écraser un tube, lui-même formé par l'enroulement en spires jointives selon un angle donné par rapport à la direction longitudinale du tube, d'une bandelette dans laquelle des éléments de renforcements sont parallèles entre eux et à la direction longitudinale de ladite bandelette et enrobés dans un mélange polymérique. La largeur de la bandelette est ajustée en fonction de l'angle avec lequel les spires sont enroulées, de manière à rendre les spires jointives. Lors de l'écrasement dudit tube, les spires étant parfaitement jointives, la bande complexe obtenue est constituée de deux couches d'éléments de renforcement continus passant d'une couche à l'autre, lesdits éléments de renforcement étant parallèles dans une couche et croisés d'une couche à l'autre avec des angles par rapport à la direction circonférentielle identiques en valeur absolue. La réalisation d'un tube avec des spires jointives permet d'obtenir des éléments de renforcement linéaires dans chacune des couches, exception faite des extrémités axiales de chacune des couches, au niveau desquelles les éléments de renforcement forment des boucles pour assurer la continuité d'une couche à l'autre.

Cette seconde technique qui consiste en un enroulement circonférentiel présente l'avantage d'être simple de mise en oeuvre et de pouvoir être effectuée avec une vitesse rapide.

La première technique de réalisation conduit effectivement à des temps de fabrication plus importants.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique. Des éléments de renforcement circonférentiels sont des éléments qui font avec ladite direction des angles compris dans l'intervalle + 2,5°, - 2,5° autour de 0°.

La direction transversale ou axiale du pneumatique est parallèle à l'axe de rotation du pneumatique.

La direction radiale est une direction coupant l'axe de rotation du pneumatique et perpendiculaire à celui-ci. Des éléments de renforcement sensiblement radiaux sont des éléments qui font avec la direction méridienne des angles compris dans l'intervalle + 5°, - 5° autour de 0°.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Les documents US 3,018,814, EP 0 351 199 et US 4,947,914 décrivent des pneumatiques comportant des armatures de sommet formées de bi-couches d'éléments de renforcement parallèles dans une couche et croisés d'une couche à l'autre qui ne présentent pas d'extrémité libre sur leurs bords. Dans ces documents, les bi-couches sont mis en place en épousant la forme du pneumatique et présentent leurs extrémités dans des zones incurvées.

Les pneumatiques d'avion ainsi réalisés selon l'une ou l'autre des techniques ci-dessus décrites présentent des limites en matière d'endurance du fait de ruptures d'éléments de renforcement des bi-couches dans les zones d'épaule du pneumatique. Les délais d'apparition de ces ruptures ou bien les conditions dans lesquelles elles apparaissent sont tout à fait acceptables d'un point de vue industriel, y compris lorsqu'un rechapage du pneumatique est envisagé.

Les inventeurs se sont toutefois donnés pour mission de fournir des pneumatiques, dont les performances d'endurance sont améliorées par rapport aux pneumatiques usuels, en particulier pour accompagner des améliorations significatives de l'usure des pneumatiques, et notamment dans lesquels l'apparition dans les zones d'épaule de ruptures des éléments de renforcement des bi-couches de l'armature de sommet est encore retardée ou bien quasi-inexistante.

Ce but est atteint selon l'invention par un pneumatique comportant une armature de sommet formée d'au moins deux bi-couches d'éléments de renforcement parallèles dans une couche, répartis avec un pas constant, et croisés d'une couche à l'autre qui ne présentent pas d'extrémité libre sur leurs bords, dans un plan radial, la densité surfacique d'éléments de renforcement dans une zone délimitée par les centres géométriques de quatre éléments de renforcement adjacents deux à deux, appartenant par paire à un bi-couche, et formant un quadrilatère étant supérieure au centre du pneumatique par rapport à celle aux extrémités des bi-couches.

Au sens de l'invention, le pas est égal à la distance entre deux éléments de renforcement mesurée selon la direction normale à l'axe principal des éléments de renforcement.

La densité surfacique est égale au sens de l'invention à la surface occupée par les éléments de renforcement rapportée à une surface délimité par un parallélogramme dont les sommets sont les centres géométriques de quatre éléments de renforcement adjacents deux à deux et appartenant par paire à deux couches radialement adjacentes chacune des couches appartenant à un bi-couche différent. Elle s'exprime en pourcentage d'éléments de renforcement.

Selon l'invention, la densité surfacique d'éléments de renforcement étant supérieure au centre du pneumatique par rapport à celle aux extrémités des bi-couches, la quantité de mélange polymérique présente entre les éléments de renforcements est plus importante aux extrémités des couches d'éléments de renforcement qu'au centre du pneumatique.

Selon une autre formulation de l'invention, le pas étant constant, la distance radiale entre deux éléments de renforcement adjacents et appartenant chacun à une couche d'un bicouche, lesdites couches étant radialement adjacentes, est supérieure aux extrémités des bi-couches par rapport à celle au centre du pneumatique.

Au sens de l'invention, la distance radiale entre les éléments de renforcement respectifs de chacune des couches de sommet est mesurée radialement entre les génératrices respectivement supérieure et inférieure desdits éléments de renforcement des couches de sommet radialement intérieure et radialement supérieure.

Les inventeurs ont su mettre en évidence que les pneumatiques ainsi réalisés autorisent des distances de roulage dans des conditions particulièrement sévères au-delà de ce qu'il est usuel de parcourir sans laisser apparaître aucune rupture d'éléments de renforcement aux extrémités des couches ou plus exactement des bi-couches de l'armature sommet.

Les inventeurs pensent interpréter cette amélioration en termes de performance d'endurance du fait du risque fortement diminué de voir des éléments de renforcement de deux couches adjacentes venir au contact les uns des autres. En effet, il est usuel que les couches de mélange polymériques qui entourent les éléments de renforcement, appelées couches de calandrage, soient relativement fines et dans le cas de pneumatiques pour avion de grandes dimensions, ces couches subissent des déformations relativement importantes lors des différentes phase de fabrication qui entraînent des déformations des mélanges polymériques de calandrage notamment par fluage. Les éléments de renforcement de deux couches radialement adjacentes, chacune appartenant à un bi-couche, peuvent ainsi risquer de venir au contact l'un de l'autre, les frottements lors de l'utilisation du pneumatique pouvant les amener jusqu'à la rupture. Les déformations subies par ces couches lors de la fabrication d'un pneumatique étant les plus importantes au niveau des épaules, du fait même de la forme du pneumatique, cette interprétation explique la présence de ruptures d'éléments de renforcement aux extrémités des bi-couches. En outre, lors des roulages c'est également au niveau des extrémités des bi-couches que les variations de tension sont maximales lors d'un tour de roue, ce qui favorise l'initiation de rupture des fils élémentaires constitutifs des éléments de renforcement et favorise ensuite les frottements entre éléments de renforcement.

Selon un mode de réalisation préféré de l'invention, dans un plan radial, aux extrémités des bi-couches, la densité surfacique d'éléments de renforcement dans une zone délimitée par les centres géométriques de quatre éléments de renforcement adjacents deux à deux, appartenant par paire à un bi-couche, et formant un quadrilatère est inférieure à 45 %. Au-delà d'une telle densité surfacique d'éléments de renforcement, le bénéfice en performance d'adhérence n'est plus aussi important, des ruptures d'éléments de renforcement pouvant apparaître dans des usages particulièrement pénalisants.

De préférence également, dans un plan radial, au centre du pneumatique, la densité surfacique d'éléments de renforcement dans une zone délimitée par les centres géométriques de quatre éléments de renforcement adjacents deux à deux, appartenant par paire à un bi-couche, et formant un quadrilatère est supérieure à 55 %. Les éléments de renforcements de la partie centrale de l'armature de renforcement étant moins sollicités d'une part lors de la fabrication et d'autre part lors de l'utilisation des pneumatiques, la présence de moins de mélange polymérique reste suffisante.

L'invention propose encore un pneumatique comportant une armature de sommet formée d'au moins deux bi-couches d'éléments de renforcement parallèles dans une couche, répartis avec un pas constant, et croisés d'une couche à l'autre, qui ne présentent pas d'extrémité libre sur leurs bords et, dans un plan radial, aux extrémités des bi-couches, le rapport de la distance radiale entre deux éléments de renforcement de deux couches adjacentes appartenant chacune à un bi-couche sur la distance radiale entre deux éléments de renforcement des deux couches d'un bi-couche étant supérieur à 1.5, et de préférence supérieur à 2.

Selon cette présentation de l'invention, le pneumatique présente aux extrémités des bi-couches une quantité de mélange polymérique supérieure entre les éléments de renforcement de deux couches adjacentes, chacune des couches appartenant à un bi-couche différent, qu'entre deux éléments de renforcement des couches d'un même bi-couche. Ce même rapport au niveau du centre du pneumatique est voisin de 1, ce qui signifie que la quantité de mélange polymérique entre les éléments de renforcement de deux couches adjacentes, chacune des couches appartenant à un bi-couche différent est sensiblement identique à celle présente entre deux éléments de renforcement des couches d'un même bi-couche. Chacune des couches étant formées d'éléments de renforcement entre deux calandrages de mélanges polymérique formant chacun une épaisseur respectivement radialement à l'extérieur et radialement à l'intérieur desdits éléments de renforcement, la distance radiale entre les éléments de renforcement respectifs de chacune des couches de sommet au centre du pneumatique est sensiblement équivalente à la somme de l'épaisseur de mélange polymérique du calandrage radialement à l'extérieur des éléments de renforcement de la couche de sommet radialement intérieure et de l'épaisseur de mélange polymérique du calandrage radialement à l'intérieur des éléments de renforcement de la couche de sommet radialement extérieure.

L'invention prévoit qu'au moins une couche de mélange polymérique est mise en place radialement entre les extrémités de deux bi-couches. Lors de la fabrication du pneumatique, il est ainsi possible de prévoir d'interposer une couche de mélange polymérique entre la pose de deux bi-couches de façon à augmenter la quantité de mélange polymérique, dans cette zone du pneumatique, entre les éléments de renforcement de deux couches adjacentes, chacune des couches appartenant à un bi-couche différent. Selon l'épaisseur de mélange polymérique souhaitée, il est possible de superposer plusieurs couches. La présence de plusieurs couches peut en outre permettre de créer des gradients de propriétés entre ces différentes couches. Il est par exemple ainsi possible de faire varier le module d'élasticité selon la direction radiale depuis une couche vers l'autre.

Selon l'invention, dans un plan radial, l'extrémité axialement intérieure de ladite au moins une couche de mélange polymérique est à une distance axiale du plan équatorial inférieure aux 4/5 de la demi largeur axiale du bi-couche le plus large auquel elle est adjacente. La couche polymérique couvre ainsi au moins 1/5 de la demi largeur du bi-couche le plus large auquel elle est adjacente et assure une densité surfacique d'éléments de renforcement inférieure à la valeur choisie sur cette zone.

Avantageusement selon une variante de l'invention, dans un plan radial, l'extrémité axialement extérieure de ladite au moins une couche de mélange polymérique est axialement extérieure à l'extrémité axialement extérieure du bi-couche le plus large auquel elle est adjacente. La couche polymérique couvre ainsi avantageusement l'extrémité du bi-couche le plus large auquel elle est adjacente et par conséquent l'extrémité axialement extérieure de l'autre bi-couche.

Un mode de réalisation préféré de l'invention prévoit que les éléments de renforcement des couches de l'armature de sommet sont inclinés, par rapport à la direction circonférentielle, d'un angle compris entre -20° et +20°, et de préférence compris entre -10° et +10°.

Une variante avantageuse de l'invention prévoit que les éléments de renforcement des couches de l'armature de sommet sont constitués de matériaux textiles, de préférence de polyamides aliphatiques et/ou de polyamides aromatiques. Les éléments de renforcements sont avantageusement des câbles composites tels que ceux décrits dans la demande de brevet WO 02/085646.

Avantageusement encore, l'armature sommet dudit pneumatique comportant au moins une couche d'éléments de renforcement circonférentiels, les éléments de renforcement circonférentiels sont constitués de matériaux textiles, de préférence de polyamides aliphatiques et/ou de polyamides aromatiques. L'armature de sommet des pneumatiques d'avion comporte avantageusement des couches d'éléments de renforcement circonférentiels assurant notamment le frettage au centre du sommet du pneumatique, les angles formés par les éléments de renforcement avec la direction circonférentielle étant avantageusement inférieurs à 5°.

Selon un mode de réalisation préféré de l'invention, l'armature de carcasse du pneumatique est constituée d'au moins une couche d'éléments de renforcement, parallèles entre eux et orientés sensiblement radialement, les éléments de renforcement de ladite au moins une couche d'armature de carcasse étant constitués de matériaux textiles, de préférence de polyamides aliphatiques et/ou de polyamides aromatiques. Les éléments de renforcements sont avantageusement des câbles composites tels que ceux décrits dans la demande de brevet WO 02/085646.

Selon d'autres réalisations de l'invention, l'armature de sommet peut encore être complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments de la bande complexe qui lui est radialement adjacente.

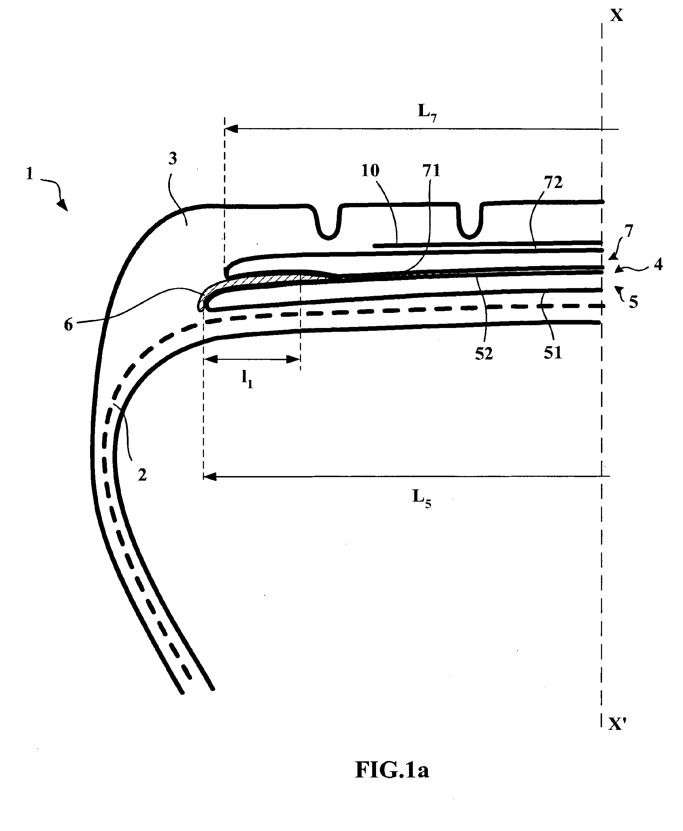

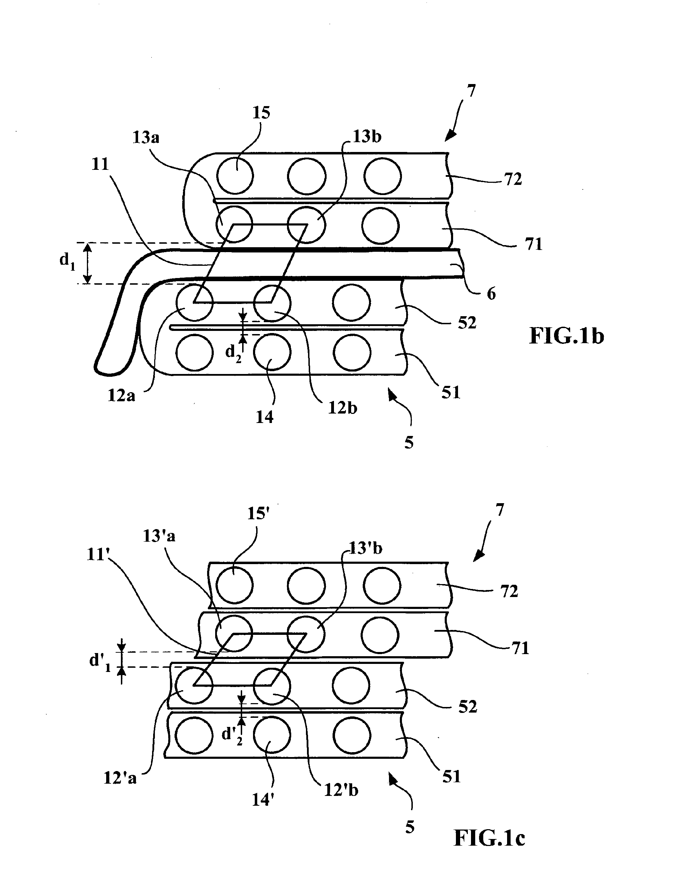

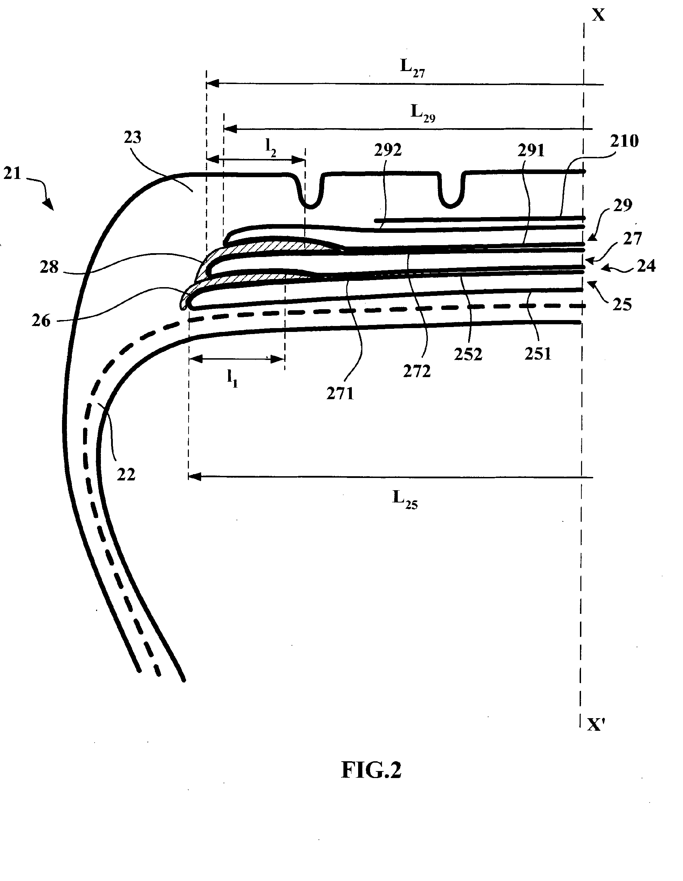

D'autres détails et caractéristiques avantageux de l'invention ressortiront ci-après de la description des exemples de réalisation de l'invention en référence aux figures 1 et 2 qui représentent :
- figurela, une vue méridienne d'un schéma d'un pneumatique selon un mode de réalisation de l'invention,
- figure 1b, une vue partielle agrandie d'une partie du schéma de la figure 1a,
- figure 1c, une vue partielle agrandie d'une autre partie du schéma de la figure 1a,
- figure 2, une vue méridienne d'un schéma d'un pneumatique selon un deuxième mode de réalisation de l'invention.

Les figures ne sont pas représentées à l'échelle pour en simplifier la compréhension. Les figures 1a et 2 ne représentent qu'une demi-vue d'un pneumatique qui se prolonge de manière symétrique par rapport à l'axe XX' qui représente le plan médian circonférentiel, ou plan équatorial, d'un pneumatique.

La figure 1a illustre un pneumatique 1 comprenant une armature de carcasse radiale 2 ancrée dans deux bourrelets, non représentés sur la figure 1 et surmontée d'une bande de roulement 3. L'armature de carcasse 2 est encore frettée par une armature de sommet 4.

L'armature de sommet 4 est formée radialement de l'intérieur vers l'extérieur:
- d'un premier bi-couche 5 comprenant deux couches 51, 52 ne présentant pas d'extrémités libres sur les bords du bi-couche 5. Ce bi-couche 5 est par exemple obtenu par trancanage d'une bandelette constituée de huit éléments de renforcement parallèles les uns avec les autres. Le trancanage correspond à une pose de la bandelette allant d'un bord à l'autre de façon continue pour former une période ou un multiple de période au tour de roue. Cette technique de pose de la bandelette permet de réaliser les couches 51, 52, les éléments de renforcement étant parallèles dans chaque couche et croisés d'une couche à la suivante et ne présentant pas d'extrémités libres en bords de couche.
- d'une couche de caoutchouc 6 recouvrant l'extrémité du bi-couche 5 et donc de la couche 52.
- D'un deuxième bi-couche 7 comprenant deux couches 71, 72 identique au bi-couche 5 avec une largeur inférieur et réalisé sensiblement de la même façon.

L'armature de sommet 4 comporte encore une couche de protection 10 constituée d'éléments de renforcement métalliques, ladite couche étant la couche de l'armature de sommet 4 radialement la plus à l'extérieur.

Les éléments de renforcements de la bandelette constituant les couches 51, 52, 71 et 72 sont des câbles composites constitués de deux filés en polyamide aromatique, chaque filé ayant un titre de 330 tex, individuellement surtordu d'une torsion S de 230 tours/mètre, et d'un filé en polyamide aliphatique dont le titre est égal à 188 tex, ledit filé individuellement surtordu d'une torsion S de 230 tours/mètre. Les trois filés ainsi préalablement tordus sur eux-mêmes sont ensuite retordus ensemble avec une torsion en Z de 230 tours/mètre pour former le câble prêt à l'usage dans les couches du pneumatique. Le câble ainsi préparé présente un diamètre égal à 1.1 mm.

La bandelette est préparée avec huit câbles répartis avec un pas de pose égal à 1.37 mm entre deux couches de calandrage en caoutchouc présentant chacune une épaisseur de 0.21 mm. La bandelette est déposée par trancanage de sorte que les éléments de renforcement forment un angle avec la direction circonférentielle compris entre 6 et 10°.

La largeur L₅ du bi-couche 5 est égale à 300 mm.

La largeur L₇ du bi-couche 7 est égale à 280 mm.

La couche de caoutchouc 6 recouvre l'extrémité du bi-couche 5 sur une largeur I₁ égale à 35 mm et donc sur une longueur légèrement supérieure au 1/10 de la largeur dudit bi-couche 5. La couche 6 présente une épaisseur égale à 0.6 mm sur cette largeur I₁, ladite couche se prolongeant légèrement avec une épaisseur qui diminue progressivement pour former une zone de transition.

La figure 1b illustre plus en détails la zone des extrémités des deux bi-couches 5 et 7 entre lesquelles est radialement intercalée une couche de mélange polymérique 6. Sur cette figure 1b, on a représenté un parallélogramme 11 dont les sommets correspondent aux centres de quatre éléments de renforcement 12a, 12b, 13a, 13b adjacents entre eux et appartenant par paire aux couches 52 et 71. Dans cette zone du pneumatique, les éléments de renforcements 12a, 12b de la couche 52 sont radialement séparés des éléments 13a, 13b de la couche 71 par la couche de caoutchouc 6.

La distance radiale d₁ entre les éléments 12 et 13 dans cette zone des bi-couches est égale à 1 mm.

Dans la même zone du pneumatique la distance radiale d₂ entre deux éléments de renforcement 12 et 14 des deux couches 51, 52 du bi-couche 5 ou entre deux éléments de renforcement 13 et 15 des deux couches 71, 72 du bi-couche 7 est égale à 0.4 mm.

Le rapport de d₁/d₂ est égal à 2.5 et donc supérieur à 2 conformément à l'invention.

Le parallélogramme 11 présente une surface égale à 2.22 mm². On en déduit une densité surfacique d'élément de renforcement égale à 43% et donc conformément à l'invention inférieur à 45%.

La figure 1c illustre plus en détails la zone du centre du pneumatique dans laquelle la couche de caoutchouc 6 n'est pas présente. Sur cette figure 1c, on a représenté un parallélogramme 11' dont les sommets correspondent aux centres de quatre éléments de renforcement 12'a, 12'b, 13'a, 13'b adjacents entre eux et appartenant par paire aux couches 52 et 71.

La distance radiale d'₁ entre les éléments 12' et 13' dans cette zone des bi-couches est égale à 0.4 mm.

Dans la même zone du pneumatique la distance radiale d'₂ entre deux éléments de renforcement 12' et 14' des deux couches 51, 52 du bi-couche 5 ou entre deux éléments de renforcement 13' et 15' des deux couches 71, 72 du bi-couche 7 est égale à 0.4 mm.

Le rapport de d'₁/d'₂ est égal à 1 conformément à l'invention.

Le parallélogramme 11' présente une surface égale à 1.53 mm². On en déduit une densité surfacique d'élément de renforcement égale à 62% et donc conformément à l'invention supérieur à 55%.

La densité surfacique d'éléments de renforcement dans une zone délimitée par les centres géométriques de quatre éléments de renforcement adjacents deux à deux, appartenant par paire à un bi-couche, et formant un quadrilatère est donc, conformément à l'invention, supérieure au centre du pneumatique par rapport à celle aux extrémités des bi-couches.

La figure 2 illustre un pneumatique 21 comprenant une armature de carcasse radiale 22 ancrée dans deux bourrelets, non représentés sur la figure 2 et surmonté d'une bande de roulement 23. L'armature de carcasse 22 est encore frettée par une armature de sommet 24.

L'armature de sommet 24 est formée radialement de l'intérieur ver l'extérieur:
- d'un premier bi-couche 25 comprenant deux couches 251, 252 ne présentant pas d'extrémités libres sur les bords du bi-couche 25,
- d'une couche de caoutchouc 26 recouvrant l'extrémité du bi-couche 25 et donc de la couche 252,
- d'un deuxième bi-couche 27 comprenant deux couches 271, 272 identique au bi-couche 25 avec une largeur inférieur et réalisé sensiblement de la même façon,
- d'une deuxième couche de caoutchouc 28 recouvrant l'extrémité du bi-couche 27 et donc de la couche 272,
- d'un troisième bi-couche 29 comprenant deux couches 291, 292 identique aux bi-couches 25 et 27 avec une largeur inférieur à celle du bi-couhe 27 et réalisé sensiblement de la même façon.

L'armature de sommet 24 comporte encore une couche de protection 210 constituée d'éléments de renforcement métalliques, ladite couche étant la couche de l'armature de sommet 24 radialement la plus à l'extérieur.

Le pneumatique 21 diffère donc du pneumatique 1 de la figure 1 par la présence d'une couche de caoutchouc 28 et d'un troisième bi-couche 29.

La largeur L₂₉ du bi-couche 29 est égale à 260 mm.

La couche de caoutchouc 28, semblable à la couche 26, recouvre l'extrémité du bi-couche 27 sur une largeur I₂ égale à 35 mm et donc sur une longueur supérieure au 1/10 de la largeur dudit bi-couche 27.

Les bi-couches 25, 27 et 29 étant sensiblement constitués de la même façon à partir des mêmes bandelettes et les couches de caoutchouc 26 et 28 étant sensiblement identiques, l'ensemble des critères liés au distances radiales entre les éléments de renforcement et les densités surfaciques sont également satisfaits par les éléments de renforcement des couches 271, 272, 291 et 292 des bi-couches 27 et 29 du fait de la présence de la couche de caoutchouc 28.

Des essais ont été réalisés avec des pneumatiques pour avion de dimension 46 x 17.0 R20 réalisés selon l'invention conformément à la représentation de la figure 2, et d'autres avec des pneumatiques dits de référence. Les pneumatiques de référence ne comportent pas les couches de caoutchouc 26 et 28.

Les essais ont consisté en des roulages sur pistes simulant des conditions sévères d'usages en termes de charges et de vitesses.

Ces essais ont mis en évidence qu'après un kilométrage de l'ordre de 250 km, les pneumatiques de référence présentent des éléments de renforcement des couches d'armature de sommet présentant des dégradations et des couches de calandrage desdites couches d'armature de sommet présentant des zones fissurées à leurs extrémités.

L'observation des pneumatiques de référence a mis en évidence qu'aucun des éléments de renforcement des couches d'armature de sommet ne présente de signes de rupture et les couches de calandrage ne sont pas fissurées aux extrémités desdites couches d'armature de sommet.

## Revendications

1. Pneumatique (1) comportant une armature de sommet (4) formée d'au moins deux bi-couches (5, 7) d'éléments de renforcement parallèles dans une couche, répartis avec un pas constant, et croisés d'une couche à l'autre qui ne présentent pas d'extrémité libre sur leurs bords, dans un plan radial, la densité surfacique d'éléments de renforcement dans une zone délimitée par les centres géométriques de quatre éléments de renforcement (13a, 13b, 12a, 12b) adjacents deux à deux, appartenant par paire à un bi-couche, et formant un quadrilatère (11) étant supérieure au centre du pneumatique par rapport à celle aux extrémités des bi-couches, **caractérisé en ce qu'**au moins une couche de mélange polymérique (6) est mise en place radialement entre les extrémités de deux bi-couches (5, 7) et **en ce que**, dans un plan radial, l'extrémité axialement intérieure de ladite au moins une couche de mélange polymérique est à une distance axiale du plan équatorial inférieure aux 4/5 de la demi largeur axiale du bi-couche (5) le plus large auquel elle est adjacente.

2. Pneumatique (1) selon la revendication 1, **caractérisé en ce que**, dans un plan radial, aux extrémités des bi-couches, la densité surfacique d'éléments de renforcement dans une zone délimitée par les centres géométriques de quatre éléments de renforcement adjacents deux à deux, appartenant par paire à un bi-couche, et formant un quadrilatère est inférieure à 45 %.

3. Pneumatique selon la revendication 1 ou 2, **caractérisé en ce que**, dans un plan radial, au centre du pneumatique, la densité surfacique d'éléments de renforcement dans une zone délimitée par les centres géométriques de quatre éléments de renforcement (13a, 13b, 12a, 12b) adjacents deux à deux, appartenant par paire à un bi-couche (5, 7), et formant un quadrilatère (11) est supérieure à 55 %.

4. Pneumatique (1) selon la revendication 1, **caractérisé en ce que**, dans un plan radial, aux extrémités des bi-couches, le rapport de la distance radiale (d1) entre deux éléments de renforcement (12, 13) de deux couches adjacentes appartenant chacune à un bi-couche (5, 7) sur la distance radiale (d2) entre deux éléments de renforcement (12, 14 ; 13, 15) des deux couches (51, 52 ;71, 72) d'un bi-couche (5, 7) est supérieur à 1,5.

5. Pneumatique (1) selon l'une des revendications précédentes, **caractérisé en ce que**, dans un plan radial, l'extrémité axialement extérieure de ladite au moins une couche de mélange polymérique (6) est axialement extérieure à l'extrémité axialement extérieure du bi-couche (5) le plus large auquel elle est adjacente.

6. Pneumatique (1) selon l'une des revendications précédentes, **caractérisé en ce que** les éléments de renforcement des couches (51, 52, 71, 72) de l'armature de sommet sont inclinés, par rapport à la direction circonférentielle, d'un angle compris entre -20° et +20°, et de préférence compris entre -10° et +10°.

7. Pneumatique (1) selon l'une des revendications précédentes, **caractérisé en ce que** les éléments de renforcement des couches (51, 52, 71, 72) de l'armature de sommet sont constitués de matériaux textiles, de préférence de polyamides aliphatiques et/ou de polyamides aromatiques.

8. Pneumatique (1) selon l'une des revendications précédentes, l'armature sommet (4) dudit pneumatique comportant au moins une couche d'éléments de renforcement circonférentiels, **caractérisé en ce que** les éléments de renforcement circonférentiels sont constitués de matériaux textiles, de préférence de polyamides aliphatiques et/ou de polyamides aromatiques.

9. Pneumatique (1) selon l'une des revendications précédentes, le pneumatique comportant une armature de carcasse (2) comportant au moins une couche d'éléments de renforcement, parallèles entre eux et orientés sensiblement radialement, **caractérisé en ce que** les éléments de renforcement de ladite au moins une couche d'armature de carcasse (2) sont constitués de matériaux textiles, de préférence de polyamides aliphatiques et/ou de polyamides aromatiques.

10. Utilisation d'un pneumatique (1) tel que décrit selon l'une des revendications 1 à 9 pour un véhicule tel qu'un avion.

11. Utilisation d'un pneumatique (1) selon la revendication 10, **caractérisé en ce que** sa pression nominale de gonflage est supérieure à 9 bars et **en ce que** sa flèche relative sous charge nominale est supérieure à 28 %.

## Patentansprüche

1. Reifen (1), der eine Scheitelbewehrung (4) aufweist, die von mindestens zwei Doppelschichten (5, 7) von innerhalb einer Schicht parallelen Verstärkungselementen, die mit einer konstanten Schrittweite verteilt sind und sich von einer Schicht zur anderen überkreuzen, gebildet wird, welche kein freies Ende an ihren Rändern aufweisen, wobei in einer radialen Ebene die Flächendichte von Verstärkungselementen in einem Bereich, der von den geometrischen Mittelpunkten von vier paarweise benachbarten Verstärkungselementen (13a, 13b, 12a, 12b) begrenzt wird, von denen jeder Doppelschicht jeweils ein Paar angehört und die ein Viereck (11) bilden, in der Mitte des Reifens größer ist als diejenige an den Enden der Doppelschichten, **dadurch gekennzeichnet, dass** mindestens eine Schicht aus einer Polymermischung (6) radial zwischen den Enden der Doppelschichten (5, 7) angeordnet ist, und dadurch, dass sich in einer radialen Ebene das axial innere Ende der mindestens einen Schicht aus einer Polymermischung in einem axialen Abstand von der äquatorialen Ebene befindet, der kleiner als 4/5 der halben axialen Breite der breitesten Doppelschicht (5) ist, welcher sie benachbart ist.

2. Reifen (1) nach Anspruch 1, **dadurch gekennzeichnet, dass** in einer radialen Ebene an den Enden der Doppelschichten die Flächendichte von Verstärkungselementen in einem Bereich, der von den geometrischen Mittelpunkten von vier paarweise benachbarten Verstärkungselementen begrenzt wird, von denen jeder Doppelschicht jeweils ein Paar angehört und die ein Viereck bilden, kleiner als 45 % ist.

3. Reifen nach Anspruch 1 oder 2, **dadurch gekennzeichnet, dass** in einer radialen Ebene in der Mitte des Reifens die Flächendichte von Verstärkungselementen in einem Bereich, der von den geometrischen Mittelpunkten von vier paarweise benachbarten Verstärkungselementen (13a, 13b, 12a, 12b) begrenzt wird, von denen jeder Doppelschicht (5, 7) jeweils ein Paar angehört und die ein Viereck (11) bilden, größer als 55 % ist.

4. Reifen (1) nach Anspruch 1, **dadurch gekennzeichnet, dass** in einer radialen Ebene an den Enden der Doppelschichten das Verhältnis des radialen Abstands (d1) zwischen zwei Verstärkungselementen (12, 13) von zwei benachbarten Schichten, von denen jeder Doppelschicht (5, 7) jeweils eine angehört, zu dem radialen Abstand (d2) zwischen zwei Verstärkungselementen (12, 14; 13, 15) der beiden Schichten (51, 52; 71, 72) einer Doppelschicht (5, 7) größer als 1,5 ist.

5. Reifen (1) nach einem der vorhergehenden Ansprüche, **dadurch gekennzeichnet, dass** in einer radialen Ebene das axial äußere Ende der mindestens einen Schicht aus einer Polymermischung (6) axial weiter außen als das axial äußere Ende der breitesten Doppelschicht (5) angeordnet ist, welcher sie benachbart ist.

6. Reifen (1) nach einem der vorhergehenden Ansprüche, **dadurch gekennzeichnet, dass** die Verstärkungselemente der Schichten (51, 52; 71, 72) der Scheitelbewehrung bezüglich der Umfangsrichtung um einen Winkel geneigt sind, der zwischen -20° und +20° liegt und vorzugsweise zwischen -10° und +10° liegt.

7. Reifen (1) nach einem der vorhergehenden Ansprüche, **dadurch gekennzeichnet, dass** die Verstärkungselemente der Schichten (51, 52; 71, 72) der Scheitelbewehrung aus textilen Materialien, vorzugsweise aus aliphatischen Polyamiden und/oder aromatischen Polyamiden, bestehen.

8. Reifen (1) nach einem der vorhergehenden Ansprüche, wobei die Scheitelbewehrung (4) des Reifens mindestens eine Schicht Umfangsverstärkungselemente aufweist, **dadurch gekennzeichnet, dass** die Umfangsverstärkungselemente aus textilen Materialien, vorzugsweise aus aliphatischen Polyamiden und/oder aromatischen Polyamiden, bestehen.

9. Reifen (1) nach einem der vorhergehenden Ansprüche, wobei der Reifen eine Karkassenbewehrung (2) aufweist, die mindestens eine Schicht von Verstärkungselementen aufweist, die untereinander parallel und im Wesentlichen radial ausgerichtet sind, **dadurch gekennzeichnet, dass** die Verstärkungselemente der mindestens einen Schicht der Karkassenbewehrung (2) aus textilen Materialien, vorzugsweise aus aliphatischen Polyamiden und/oder aromatischen Polyamiden, bestehen.

10. Verwendung eines Reifens (1), wie in einem der Ansprüche 1 bis 9 beschrieben, für ein Fahrzeug wie etwa ein Flugzeug.

11. Verwendung eines Reifens (1) nach Anspruch 10, **dadurch gekennzeichnet, dass** sein Luftdruck höher als 9 bar ist, und dadurch, dass seine relative Einfederung unter Nennlast höher als 28 % ist.

## Claims

1. Tyre (1) comprising a crown reinforcement (4) formed from at least two bilayers (5, 7) of parallel reinforcing elements in a ply, which bilayers are distributed with a constant pitch and crossed from one ply to another, and which do not have a free end at the edges thereof, within a radial plane, the surface density of reinforcing elements in a region bounded by the geometric centres of four pairwise adjacent reinforcing elements (13a, 13b, 12a, 12b), belonging in pairs to a bilayer, and forming a quadrilateral (11) being greater at the centre of the tyre than at the ends of the bilayers, **characterized in that** at least one layer of polymer compound (6) is placed radially between the ends of two bilayers (5, 7) and **in that**, within a radial plane, the axially inner end of said at least one layer of polymer compound is at an axial distance from the equatorial plane of less than 4/5 of the axial half-width of the widest bilayer (5) to which it is adjacent.

2. Tyre (1) according to Claim 1, **characterized in that**, within a radial plane, at the ends of the bilayers, the surface density of reinforcing elements in a region bounded by the geometric centres of four pairwise adjacent reinforcing elements, belonging in pairs to a bilayer, and forming a quadrilateral, is less than 45%.

3. Tyre according to Claim 1 and 2, **characterized in that**, within a radial plane, at the centre of the tyre, the surface density of reinforcing elements in a region bounded by the geometric centres of four pairwise adjacent reinforcing elements (13a, 13b, 12a, 12b), belonging in pairs to a bilayer (5, 7), and forming a quadrilateral (11), is more than 55%.

4. Tyre (1) according to Claim 1, **characterized in that**, within a radial plane, at the end of the bilayers, the ratio of the radial distance (d1) between two reinforcing elements (12, 13) of two adjacent plies, each ply belonging to a bilayer (5, 7), to the radial distance (d2) between two reinforcing elements (12, 14 ; 13, 15) of the two plies (51, 52 ; 71, 72) of a bilayer (5, 7) is greater than 1.5.

5. Tyre (1) according to one of the preceding claims, **characterized in that**, within a radial plane, the axially outer end of said at least one layer of polymer compound (6) is axially to the outside of the axially outer end of the widest bilayer (5) to which it is adjacent.

6. Tyre (1) according to one of the preceding claims, **characterized in that** the reinforcing elements of the crown reinforcement plies (51, 52, 71, 72) are inclined at an angle of between - 20° and +20°, preferably between -10° and +10°, to the circumferential direction.

7. Tyre (1) according to one of the preceding claims, **characterized in that** the reinforcing elements of the crown reinforcement plies (51, 52, 71, 72) are made of textile materials, preferably aliphatic polyamide and/or aromatic polyamide textile materials.

8. Tyre (1) according to one of the preceding claims, when the crown reinforcement (4) of said tyre comprises at least one ply of circumferential reinforcing elements, **characterized in that** the circumferential reinforcing elements are made of textile materials, preferably aliphatic polyamide and/or aromatic polyamide textile materials.

9. Tyre (1) according to one of the preceding claims, the tyre comprising a carcass reinforcement (2) comprising at least one ply of mutually parallel reinforcing elements oriented substantially radially, **characterized in that** the reinforcing elements of said at least one carcass reinforcement ply (2)are made of textile materials, preferably aliphatic polyamide and/or aromatic polyamide textile materials.

10. Use of a tyre (1) as described according to one of Claims 1 to 9, for a vehicle, such as an aircraft.

11. Use of a tyre (1) according to Claim 10, **characterized in that** its nominal inflation pressure is greater than 9 bar and **in that** its relative deflection under nominal load is greater than 28%.
